# EUROPÄISCHE PATENTSCHRIFT

(11) **EP 2 504 285 B1**
(45) Veröffentlichungstag und Bekanntmachung des Hinweises auf die Patenterteilung: **07.01.2015**
(21) Anmeldenummer: 10781700.9
(22) Anmeldetag: 23.11.2010
(51) Int. Cl.: C02F 11/06, F23G 7/04, C02F 1/36, C02F 1/72

(54) **VERFAHREN ZUR VERBRENNUNG VON RESTSTOFFEN**
METHOD FOR COMBUSTING WASTE MATERIALS
PROCÉDÉ POUR LA COMBUSTION DE RÉSIDUS

(30) Priorität: 24.11.2009 DE 102009054312
(43) Veröffentlichungstag der Anmeldung: 03.10.2012
(73) Patentinhaber: Air Liquide Deutschland GmbH, 40235 Düsseldorf (DE); L'Air Liquide Société Anonyme pour l'Etude et l'Exploitation des Procédés Georges Claude, 75007 Paris (FR)
(72) Erfinder: GROSS, Gerhard, 47877 Willich (DE)
(74) Vertreter: Heine, Christian Klaus
(86) Internationale Anmeldenummer: PCT/EP2010/068051
(87) Internationale Veröffentlichungsnummer: WO 2011/064219

(56) Entgegenhaltungen:
- DE-A1- 2 548 110
- US-A- 4 728 285
- McGreggor, Lani: "Speaking of Savings", Bullseye Glass Co. , 20. April 2008 (2008-04-20), XP002623939, Gefunden im Internet: URL:http://www.bullseyeglass.com/weblog/20 08/04/20/speaking-of-savings/ [gefunden am 2011-02-21]

## Beschreibung

Die vorliegende Erfindung betrifft ein Verfahren zur Verbrennung eines Reststoffs. Die Erfindung findet insbesondere Anwendung bei der Verbrennung von kontaminierten Flüssigkeiten, die in einer Kläranlage nicht entsorgt werden können.

Flüssigkeiten, die mit anorganischen und organischen Bestandteilen kontaminiert sind und bei denen eine Wiederverwertung oder eine Entsorgung in Kläranlagen aufgrund schlechter biologischer Abbaubarkeit nicht möglich ist, müssen durch Verbrennungsreaktionen thermisch entsorgt werden. Üblicherweise werden solche Abfälle mit Luft als Oxidationsmittel in einer Stützflamme verbrannt. Dazu wird die kontaminierte Flüssigkeit durch Zerstäuben und Verdampfen in die Gasphase überführt, mit Luft gemischt und auf Temperaturen zwischen 850 °C und 1400 °C erhitzt. Die organischen Substanzen oxidieren dabei vollständig zu CO₂ und H₂O, Schwefel zu SO₂. Als Produkte erhält man inerte, anorganische Stoffe, die staubförmig oder in einer flüssigen Phase vorliegen. Obwohl die Reaktionen der meisten Bestandteile prinzipiell exotherm verlaufen, ist die Verbrennung aufgrund der hohen und oft schwankenden Wasserkonzentrationen zum großen Teil nicht autotherm, das heißt, es werden zusätzliche Stützbrennstoffe benötigt. Üblicherweise werden dieser Flüssigkeiten daher in Monoverbrennungsanlagen mit vertikal angeordneten, feststehenden von oben befeuerbaren Öfen verbrannt.

Da die kontaminierten Flüssigkeiten meistens mit festen Stoffen und/oder polymerisierbaren Produkten verunreinigt sind, werden zur Eindüsung der verunreinigten Flüssigkeiten innen mischende und außen mischende Zerstäuberdüsen mit einem großen Düsenquerschnitt eingesetzt. Als Zerstäubermedium kommt in der Regel Luft oder Dampf zum Einsatz. Bei der Verwendung von Druck- oder Dampfzerstäubern wird die Flüssigkeit in Tröpfchen mit Durchmessern zwischen 200 µm und 400 µm zerstäubt. Dieser relativ große Durchmesser der Tropfen ist von Nachteil, da eine längere Verweilzeit in der Flamme zur vollständigen Verdampfung benötigt wird. Bei der Verwendung von Dampf als Zerstäubermedium kann dieser bis zu 10 % des Rauchgasvolumens ausmachen und die Reaktion der Flamme mit dem Sauerstoff wird behindert. Reine Druckzerstäuberdüsen kommen nicht zur Anwendung, da diese zu Verstopfungen durch die festen Stoffe in den kontaminierten Flüssigkeiten neigen.

Aufgrund der Kontaminierungen in den Flüssigkeiten ist auch das Rauchgas des Verbrennungsprozesses mit staub- und gasförmigen Stoffen, wie z. B. SO₂, Cl, CO, NOₓ kontaminiert, welche aufwendig aus dem Rauchgas entfernt werden müssen. Die aufwendige Kühlung und Reinigung des Rauchgases ist maßgeblich für die hohen Betriebskosten von Verbrennungsanlagen verantwortlich. Das Volumen des entstehenden Rauchgases ist somit der begrenzende Faktor des Verbrennungsprozesses.

Es ist bekannt, dem Verbrennungsprozess Sauerstoff zuzuführen, um die Effizienz des Verbrennungsprozesses bei einem gleichbleibenden Rauchgasvolumen zu erhöhen, wobei der Anteil des Stickstoffs im Rauchgas gesenkt und der Anteil der anderen Rauchgaskomponenten wie Kohlendioxid, Wasserdampf und Schwefeldioxid erhöht wird. Eine Erhöhung des Sauerstoffgehaltes hat allerdings auch eine Erhöhung der Verbrennungstemperatur zur Folge, für die die Verbrennungsanlagen oft nicht ausgelegt sind. Der Anteil von Kohlenmonoxid wird durch die Temperaturerhöhung reduziert, da dieses vollständig oxidiert. Außerdem wird durch die Temperatursteigerung der Stickoxidanteil nachteilig erhöht. Der zusätzliche Sauerstoff wird durch Anreicherung der Verbrennungsluft, durch Direktinjektion in die Flamme oder den Reaktionsraum, oder durch separate Sauerstoffbrenner in die Brennkammer eingetragen.

Aus der DE 2506438 A1 ist ist ein Verfahren zur thermischen Spaltung von Abfällschwefelsäure bekannt. Hier wird beschrieben, dass die Schwefelsäure in ein Ultraschallfeld eingedüst und unter Bildung eines SO2-haltigen Gases umgesetzt. Dieses Verfahren konnte sich aufgrund von Werkstoffproblemen und des hohen für seine Verwirklichung notwendigen technischen Aufwandes, die zu einer hohen Wartungsintensität und verringerten Laufzeiten führt, nicht am Markt durchsetzen.

Aus DE2548110 A1 ist ein Verfahren zum Verbrennen flüssiger Reststoffe bekannt, bei dem Druckluft und der Reststoff über einen Ultraschallzerstäuber einer Verbrennung zugeführt werden.

Aufgabe der Erfindung ist es daher, die mit Bezug auf den Stand der Technik geschilderten Probleme zumindest teilweise zu lösen und insbesondere ein Verfahren anzugeben, die die Effizienz einer Verbrennung von Flüssigkeiten ohne eine Steigerung des Rauchgasvolumens erhöht.

Diese Aufgaben werden gelöst mit einem Verfahren gemäß den Merkmalen des unabhängigen Anspruchs. Weitere vorteilhafte Ausgestaltungen der Erfindung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Das erfindungsgemäße Verfahren zur Verbrennung eines flüssigen Reststoffs zeichnet sich dadurch aus, dass ein Betriebsmedium mit einem Sauerstoffgehalt von mehr als 90 Vol.-% (Volumen-%), bevorzugt technisch reiner Sauerstoff, und der Reststoff der Verbrennung über mindestens einen Ultraschallzerstäuber zugeführt werden. Durch das Betriebsmedium werden Ultraschallwellen erzeugt und der Reststoff wird fein zerstäubt. Das Betriebsmedium hat somit zwei Funktionen. Zum einen erzeugt es Ultraschallwellen, die den Reststoff in feine Tropfen zerstäuben, die einen Durchmesser zwischen 50 µm und 100 µm aufweisen, so dass eine größere Gesamtoberfläche des Reststoffs entsteht. Zum anderen steht das Betriebsmedium (technisch reiner Sauerstoff) als Reaktionspartner des fein zerstäubten Reststoffs zur Verfügung. Der Verbrennungsprozess kann somit effizienter betrieben werden. Das erfindungsgemäße Verfahren stellt einem Verbrennungsprozess Tropfen des zu verbrennenden Reststoffs mit einem kleineren Durchmesser und ein Gas mit einem erhöhten Sauerstoffgehalt zur Verfügung ohne die Temperatur des Verbrennungsprozesses, das Rauchgasvolumen und die Emission von Oxiden über die betriebsbedingten Grenzen zu erhöhen.

Als Betriebsmedium wird ein Gasgemisch mit einem Sauerstoffgehalt von mehr als 90 Vol.-% eingesetzt, bevorzugt technisch reiner Sauerstoff mit einem Sauerstoffgehalt von über 99 Vol.-%, bevorzugt mehr als 99,9 Vol.-%. Vorteilhaft ist es außerdem, dass die Sauerstoffkonzentration im Ofen während des Verbrennungsprozesses den Verbrennungsparametern wie Reststoffsmenge, Temperatur, Rauchgasmenge und/oder Gaskonzentration angepasst werden kann. Die zuzuführende Betriebsmediummenge kann bevorzugt zwischen der für die Zerstäubung notwendigen Menge, der für die vollständige Verbrennung notwendige Sauerstoffmenge oder einer beliebig darüber hinausgehenden Menge variiert werden.

Unter Ultraschallzerstäuber wird eine Zweistoffdüse verstanden, der sowohl der Reststoff als auch das Betriebsmedium zugeführt wird. Das Betriebsmedium wird dabei dem Ultraschallzerstäuber so zugeführt, dass in einer Resonanzkammer des Ultraschallzerstäubers Ultraschallwellen bevorzugt mit Frequenzen zwischen 20 kHz und 100 kHz angeregt werden, die auf ein Gebiet vor dem Ultraschallzerstäuber gerichtet sind. Der Reststoff tritt in Tropfenform aus dem Ultraschallzerstäuber aus und wird vor diesem durch die Ultraschallwellen weiter zerstäubt. In Reaktion beispielsweise mit dem Betriebsmedium verbrennt der Reststoff. Unter einem flüssigen Reststoff wird ein Reststoff verstanden, der bei Standardbedingungen als Flüssigkeit vorliegt und der durch eine Kläranlage nicht mehr weiter gereinigt werden kann. Insbesondere umfasst der Reststoff Flüssigkeiten mit organischen und/oder halogenen Bestandteilen, mit toxischen Inhaltsstoffen, mit Alkalisalzen und ähnlichem. Der Reststoff weist einen Brennwert vom mehr als 0 MJ/kg (Megajoule pro Kilogramm), bevorzugt mehr als 0,5 MJ/kg, und weniger als 30 MJ/kg, insbesondere weniger als 10 MJ/kg auf. Unter flüssigen Reststoffen werden solche Reststoffe verstanden, die insbesondere bei der Verarbeitung von beispielsweise Aquarchemikalien, Pharmazeutika, Kunststoffen, Farben, Superabsorber, usw. anfallen, insbesondere solche bei denen eine Wiederverwertung oder eine Entsorgung in Kläranlagen aufgrund schlechter biologischer Abbaubarkeit nicht möglich ist. Dies gilt insbesondere für Reststoffe mit schwer spaltbaren organischen und anorganischen Verbindungen, chlorierten Lösungsmitteln, Säuren, Halogenkohlenwasserstoffen oder halogenhaltigen Abfällen wie Altöle, die mit PCB kontaminiert sind. Unter toxischen Inhaltsstoffen werden solche Stoffe verstanden, die schon in geringen Dosen Schäden bei Mensch, Tier und/oder Pflanzen hinterlassen. Unter Reststoffen mit einem geringen Brennwert zwischen 0 und 25 MJ/kg, bevorzugt zwischen 0,5 und 5 MJ/kg werden insbesondere solche Flüssigkeiten verstanden, die in kommerziellen Öfen nicht effizient genug verbrannt werden können. Unter konventionellen Brennstoffen werden insbesondere Brennstoffe wie Erdgas und Heizöl verstanden. Klassische flüssige Brennstoffe wie beispielsweise Öl stellen keinen Reststoff im Sinne dieser Erfindung dar.

Die Verbrennung wird durch einen Hauptbrenner befördert, dem zumindest ein Stützbrennstoff zugeführt wird. Der Hauptbrenner wird zum Aufrechterhalten einer Flamme bzw. zum Einhalten einer Verbrennungstemperatur eingesetzt. Der Hauptbrenner kann ein konventioneller Brenner sein, der mit einem Stützbrennstoff und ggf. mit Luft, Sauerstoff angereicherter Luft oder reinem Sauerstoff betrieben wird.

Es ist besonders bevorzugt, dass der Stützbrennstoff ein konventioneller Brennstoff ist. Stützbrennstoffe sind besonders bevorzugt Reststoffe mit hohem Heizwert, wie z. B. Lösungsmittel und Alkohole oder konventionelle Brennstoffe.

Gemäß einer vorteilhaften Ausgestaltung des Verfahrens wird ein Stützbrennstoff zumindest einem der folgenden Elemente:
a) dem Hauptbrenner und
b) dem Reststoff
zugegeben, wenn bei der Verbrennung eine vorgebbare Grenztemperatur unterschritten wird.

Dies erlaubt es in vorteilhafter Weise, den Stützbrennstoff nur dann zuzugeben, wenn die Temperatur der Verbrennung beziehungsweise im Ofen so niedrig ist, dass ein Erlöschen der Flamme zu befürchten ist. So kann Stützbrennstoff eingespart werden. Die Zugabe des Stützbrennstoffs, insbesondere Öl und/oder Lösemittel, über den oder gemeinsam mit dem Reststoff, mit dem der Stützbrennstoff beispielsweise in einem Tank und/oder in der Zuleitung zum Ultraschallzerstäuber gemischt werden kann befördert vorteilhaft den Verbrennungsprozess und kann einen eventuell vorhandenen Hauptbrenner entlasten oder es ermöglichen, diesen mit einer Solllast zu betreiben.

Gemäß einer weiteren vorteilhaften Ausgestaltung des Verfahrens wird ein Stützbrennstoff zumindest einem der folgenden Elemente:
a) dem Hauptbrenner und
b) dem Reststoff
zugegeben und die Zugabe des Stützbrennstoffs so geregelt, dass bei der Verbrennung die Temperatur in einem vorgebbaren Temperaturbereich liegt.

Dies erlaubt eine Verfahrensführung, bei der nur so viel Stützbrennstoff eingesetzt wird, dass die Verbrennung in einem optimalen Temperaturbereich gehalten wird. Dieser Temperaturbereich kann beispielsweise so vorgegeben werden, dass eine möglichst effektive oder vollständige Verbrennung stattfindet oder dass die Zusammensetzung des entstehenden Rauchgases und/oder der entstehenden Schlacke einem vorgebbaren Profil beispielsweise im Hinblick auf die Anteile an Schadstoffen genügt.

Der Stützbrennstoff wird zumindest einem der folgenden Elemente:
a) dem Hauptbrenner und
b) dem Reststoff
zugegeben und die Zugabe des Stützbrennstoffs in Abhängigkeit vom Wassergehalt des flüssigen Reststoffs gesteuert.

Es hat sich herausgestellt, dass oftmals der Wassergehalt der zu verbrennenden flüssigen Reststoffe im Wesentlichen konstant ist und einen hohen Einfluss auf die benötigte Menge an Stützbrennstoff hat. In diesem Falle ist es einfach möglich, die Menge an zuzugebendem Stützbrennstoff einzustellen oder zu steuern, in dem der Wassergehalt des flüssigen Reststoffs einmal oder in regelmäßigen Abständen oder konstant bestimmt und überwacht und als Steuergröße verwendet wird. So kann in vorteilhafter Weise der Verbrauch an Stützbrennstoff verringert werden.

Gemäß einer weiteren vorteilhaften Ausgestaltung des erfindungsgemäßen Verfahrens wird dem Ultraschallzerstäuber eine Menge an Betriebsmedium zugeführt, die größer ist als die für die Zerstäubung notwendige Menge.

So kann insbesondere der für die Verbrennung der Flüssigkeit und ggf. des Stützbrennstoffs notwendige Sauerstoff über den Ultraschallzerstäuber zumindest teilweise zumindest als Teil des Betriebsmediums zugeführt werden.

Vorteilhaft ist es, wenn die Verbrennungstemperatur zwischen 800 °C und 1600 °C, bevorzugt zwischen 850 °C und 1400 °C, liegt. Als Verbrennungstemperatur wird hierbei die Temperatur des abgeführten Rauchgases verstanden.

Besonders vorteilhaft ist es, wenn der Ultraschallzerstäuber als Hartmann-, Hartmann-Whistle oder Helmholtz-Generator ausgebildet ist. Die zu zerstäubende Flüssigkeit wird dem Ultraschallzerstäuber bevorzugt in einem zentralen Rohr und das Betriebsmedium in einem konzentrisch dazu angeordneten Rohr zugeführt. Das Betriebsmedium wird in eine Resonanzkammer geleitet, wo es Ultraschallwellen mit Frequenzen zwischen 20 und 100 kHz erzeugt, die aufgrund einer geeigneten Geometrie auf das Gebiet vor dem Ultraschallzerstäuber gerichtet sind. Das Betriebsmedium tritt durch einen Ringspalt aus und vermischt sich mit der zentral in Tropfenform austretenden Flüssigkeit. Die Flüssigkeit vor dem Ultraschallzerstäuber wird aufgrund der Ultraschallwellen weiter zerstäubt.

Bei anderen Ausführungsformen wird der zentral austretende Reststoff zunächst um 90° umgelenkt und mit dem Betriebsmediumstrom axial nach vorne aus dem Ultraschallzerstäuber geführt.

Das Betriebsmedium kann auch zentral geführt und durch eine Umlenkplatte in die Resonanzkammer abgelenkt, von wo auch das Betriebsmedium den Ultraschallzerstäuber verlässt. Der Reststoff wird in einem äußeren Rohr geführt und tritt durch einen Ringspalt aus dem Ultraschallzerstäuber aus.

Besonders vorteilhaft ist es, wenn eine Mischung von Reststoff und Betriebsmedium außerhalb des Ultraschallzerstäubers stromabwärts erfolgt. So wird verhindert, dass das Betriebsmedium und der Reststoff schon in dem Ultraschallzerstäuber exotherm miteinander reagieren. Die so entstehende außen geführte Flamme beansprucht den Ultraschallzerstäuber thermisch nicht in überhöhtem Maße.

Besonders vorteilhaft ist es, wenn das Betriebsmedium mit einer Geschwindigkeit v_{z} einer Resonanzkammer des Ultraschallzerstäubers zugeführt wird, wobei die Geschwindigkeit v_{z} mit der Schallgeschwindigkeit des Betriebsmediums v_{c} einen Quotienten v_{z/}v_{c} bildet, der zwischen 0,9 und 1,1, bevorzugt zwischen 0,95 und 1,05, besonders bevorzugt zwischen 0,99 und 1,01 liegt. Es ist die Schallgeschwindigkeit des Betriebsmediums unter Normalbedingungen gemeint, also bei einer Temperatur von 20 °C und einem Druck von 1.013 hPa. Diese beträgt beispielsweise 316 m/sec für reinen Sauerstoff. Das Eintreten des Betriebsmediums in die Resonanzkammer des Ultraschallzerstäubers mit Schallgeschwindigkeit bewirkt eine besonders effiziente Generierung von Ultraschallwellen und eine besonders feine Zerstäubung der Flüssigkeit.

Zur Ausfuhrung des Verfahrens wird ein Ofen zum Verbrennen von flüssigen Reststoffen mit einem Brennraum und mindestens einem Ultraschallzerstäuber vorgeschlagen, wobei der Ultraschallzerstäuber einen Betriebsmediumanschluss zur Zuführung von technisch reinem Sauerstoff als eines Betriebsmedium und einen Flüssigkeitsanschluss zur Zuführung des flüssigen Reststoffs aufweist. Der mindestens eine Ultraschallzerstäuber ist als außen mischender Ultraschallzerstäuber ausgebildet. Der Ofen ist insbesondere geeignet und bestimmt zur Durchführung des erfindungsgemäßen Verfahrens.

Besonders vorteilhaft ist es, wenn der Ofen einen Hauptbrenner mit einer Hauptbrennerachse und der mindestens eine Ultraschallzerstäuber eine Längsachse im Austrittsbereich des Betriebsmediums bzw. des Reststoffs aufweist und der Winkel zwischen Längsachse und Hauptbrennerachse zwischen 30° und 60° liegt. Die Flammenseiten des Hauptbrenners und des Ultraschallzerstäubers sind also so ausgerichtet, dass sich die Flammen gegenseitig schneiden. Dies hat den Vorteil, dass der Hauptbrenner bei Unterschreiten einer kritischen Temperatur oder des Erlöschens der Flamme des Ultraschallzerstäubers hinzugeschaltet werden kann, so dass der Verbrennungsprozess aufrecht erhalten werden kann.

Ebenfalls vorteilhaft ist es, wenn eine Mehrzahl von Ultraschallzerstäubern symmetrisch an Wänden des Brennraums angeordnet ist. Symmetrisch bedeutet hierbei, dass die Ultraschallzerstäuber in einer horizontalen Ebene auf einen Umfang des Brennraums mit gleichem Abstand zueinander angeordnet sind oder mit einem gleichen Abstand in vertikaler Richtung zueinander angeordnet sind. Mit mindestens zwei Ultraschallzerstäubern kann ein höherer Durchsatz von Reststoff erreicht werden. Die Ultraschallzerstäuber können bevorzugt unterschiedliche Resonatoren aufweisen.

Die für das erfindungsgemäße Verfahren offenbarten Details lassen sich auf den Ofen übertragen und anwenden.

Die Erfindung sowie das technische Umfeld werden nachfolgend anhand der Figuren beispielhaft erläutert. Es ist darauf hinzuweisen, dass die Figuren besonders bevorzugte Ausführungsvarianten der Erfindung zeigen, diese jedoch nicht darauf beschränkt ist. Es zeigen schematisch:
- Fig. 1:: ein erstes Ausführungsbeispiel eines Ofens im Längsschnitt;
- Fig. 2:: ein zweites Ausführungsbeispiel eines Ofens Längsschnitt;
- Fig. 3:: ein erstes Ausführungsbeispiel eines Ultraschallzerstäubers im Längsschnitt;
- Fig. 4:: ein zweites Ausführungsbeispiel eines Ultraschallzerstäubers im Längsschnitt; und
- Fig. 5:: ein drittes Ausführungsbeispiel eines Ultraschallzerstäubers im Längsschnitt.

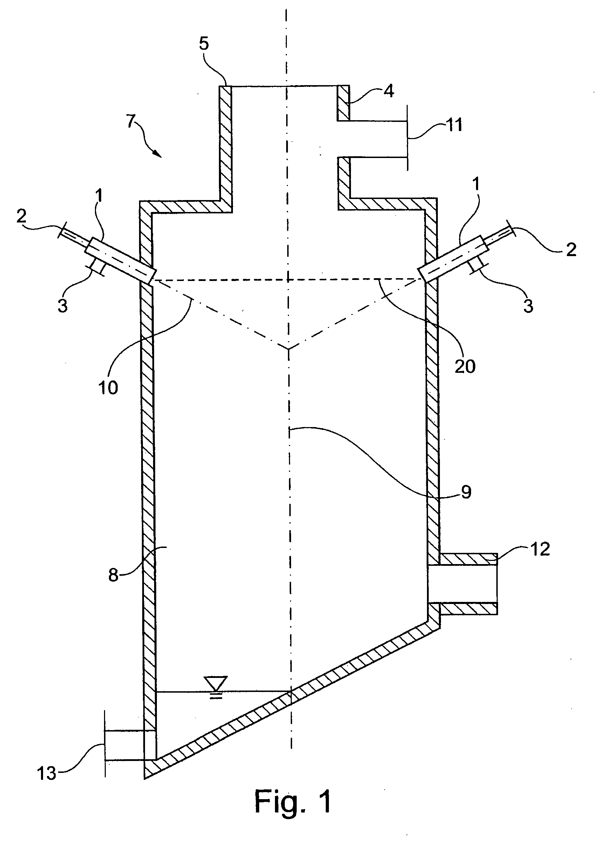

Fig. 1 zeigt einen Längsschnitt eines ersten Ausführungsbeispiels eines Ofens 7 zum Verbrennen eines flüssigen Reststoffs. Am oberen Ende eines Brennraums 8 ist ein Hauptbrenner 4 mit einem Stützbrennstoffanschluss 5 und einem Oxidationsmittelanschluss 11 angeordnet. An den Wänden des Brennraums 8 sind Ultraschallzerstäuber 1 angeordnet. Die Ultraschallzerstäuber 1 weisen jeweils einen Flüssigkeitsanschluss 2 zur Zuführung des flüssigen Reststoffes und einen Betriebsmediumanschluss 3 auf. Der Hauptbrenner 4 weist eine Hauptbrennerachse 9 und der Ultraschallzerstäuber 1 weist eine Längsachse 10 auf, die so angeordnet sind, dass sie sich in einem Winkel zwischen 30 und 60° schneiden. Die Ultraschallzerstäuber 1 sind vorzugsweise symmetrisch an den Wänden des Brennraums 8 angeordnet. Dies bedeutet, dass in einer vertikalen Ebene 20 am Umfang des Brennraums 8 die Ultraschallzerstäuber 1 mit gleichem Abstand zueinander angeordnet sind und jeweils einen gleicher Winkel zwischen der Längsachse 10 und Hauptbrennerachse 9 besteht. Im unteren Bereich des Brennraums 8 ist ein Rauchgasabzug 12 angeschlossen. Am tiefsten Punkt des Brennraums 8 ist zudem ein Schlackeabzug 13 vorhanden.

Während des Verbrennprozesses wird dem Ultraschallzerstäuber 1 über den Flüssigkeitsanschluss 2 ein zu verbrennender flüssiger (flüssiger) Reststoff, insbesondere eine kontaminierte Flüssigkeit, und über den Betriebsmediumanschluss 3 ein Betriebsmedium mit mindestens 90 Vol.-% Sauerstoff, bevorzugt technisch reiner Sauerstoff zugeführt. Diese Zuführung erfolgt so, dass das Betriebsmedium im Ultraschallzerstäuber 1 Ultraschallwellen anregt, die in den Brennraum 8 gerichtet sind. Die Flüssigkeit und das Betriebsmedium treten aus dem Ultraschallzerstäuber 1 in den Brennraum 8 ein, wobei der Reststoff zerstäubt wird. Nach dem Austritt aus dem Ultraschallzerstäuber 1 werden die Reststofftropfen durch die Ultraschallwellen weiter zerstäubt, so dass Tropfen mit einem Durchmesser von 50 µm bis 100 µm entstehen. Die feinen Reststofftropfen reagieren mit dem Sauerstoff und die in der Flüssigkeit vorhandenen Bestandteile oxidieren dabei vollständig. Ist die Temperatur aufgrund der Reaktion des Sauerstoffs mit der zerstäubten Flüssigkeit nicht ausreichend, um den Verbrennungsprozess aufrecht zu erhalten, so kann durch den Hauptbrenner 4 die Temperatur zusätzlich erhöht bzw. aufrecht erhalten werden. Über den Stützbrennstoffanschluss 5 wird dann ein Stützbrennstoff, wie z. B. Erdgas, Heizöl und/oder ein Lösungsmittel, dem Brennraum 8 zugeführt. Zusätzlich kann über den Oxidationsmittelanschluss 11 Luft, mit Sauerstoff angereicherte Luft oder reiner Sauerstoff dem Brennraum 8 zugeführt werden.

Die bei dem Verbrennungsprozess entstehenden Rauchgase können über den Rauchgasabzug 12 einer Rauchgasbehandlungseinrichtung zugeführt werden. Feste oder flüssige Schlacke kann über den Schlackeabzug 13 aus dem Brennraum 8 entfernt werden.

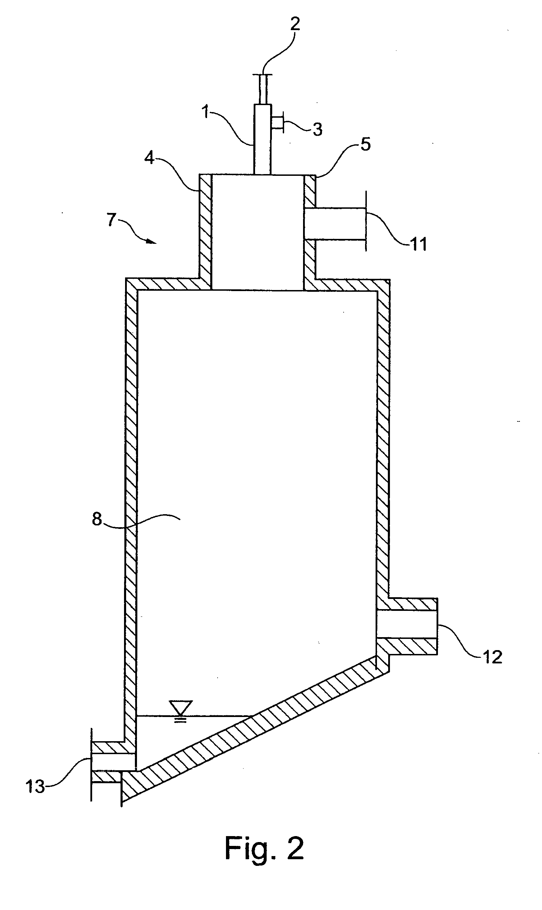

Fig. 2 zeigt ein zweites Ausführungsbeispiel des Ofens 7 im Längsschnitt. Die Bezugszeichen stimmen mit den zuvor eingeführten Bezugszeichen überein und nur die Unterschiede zum vorhergehenden Ausführungsbeispiel werden aufgezeigt. In dem zweiten Ausführungsbeispiel ist der Ultraschallzerstäuber 1 im Hauptbrenner 4 angeordnet. Die Hauptbrennerachse 9 und die Längsachse 10 des Ultraschallzerstäubers 1 stimmen somit überein.

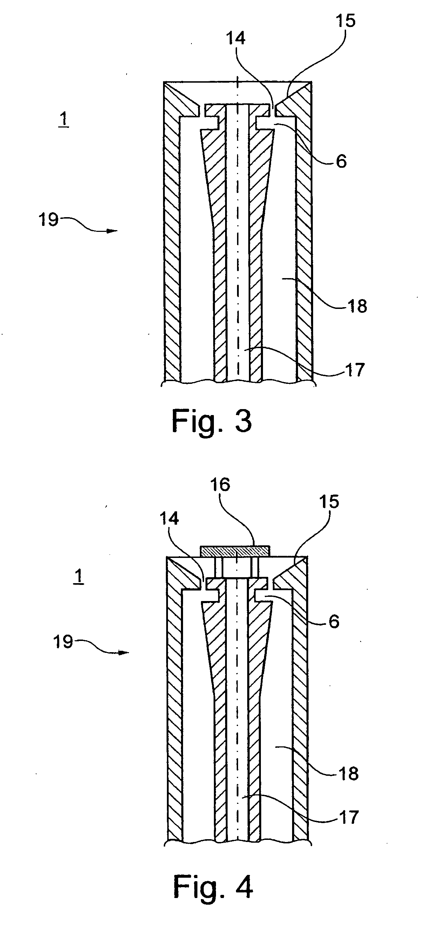

Die Fig. 3, 4 und 5 zeigen verschiedene Ausführungsformen eines Ultraschallzerstäubers 1 im Längsschnitt, die zur Durchführung des erfindungsgemäßen Verfahrens eingesetzt werden können und die als Hartmann-Generator, Hartmann-Whistle-Generator und als Helmholtz-Generator bekannt sind.

In den Ausführungsbeispielen gemäß Fig. 3 und 4 wird der Reststoff über eine zentrale, rohrförmige Flüssigkeitszuführung 17 dem Ultraschallzerstäuberkopf 19 zugeführt. Das Betriebsmedium, technisch reiner Sauerstoff, wird durch eine konzentrisch um die Flüssigkeitszuführung 17 angeordnete Betriebsmediumzuführung 18 dem Ultraschallzerstäuberkopf 19 zugeführt. Bei dem in Fig. 3 gezeigten Ausführungsbeispiel tritt der Reststoff direkt aus der Flüssigkeitszuführung 17 in den Brennraum 8 aus und kann dabei grob zerstäuben. Das Betriebsmedium wird mit hoher Geschwindigkeit in die Resonanzkammer 6 geführt, wobei Ultraschallwellen erzeugt werden, die aufgrund der konischen Aufweitung 15 in Austrittsrichtung des Reststoffs und des Betriebsmediums vor den Ultraschallzerstäuber 1 gerichtet sind. Das Betriebsmedium tritt durch einen Ringspalt 14 aus dem Ultraschallzerstäuber 1 in den Brennraum 8 aus und vermischt sich mit dem grob zerstäubten Reststoff. Aufgrund der Ultraschallwellen werden die zerstäubten Flüssigkeitstropfen weiter zerkleinert, so dass sie einen Durchmesser zwischen 50 µm und 100 µm besitzen.

Bei dem Ausführungsbeispiel gemäß Fig. 4 wird der flüssige Reststoff (die Flüssigkeit) durch eine Umlenkvorrichtung 16 zunächst um 90° nach außen umgelenkt und durch das Betriebsmedium, welches durch den Ringspalt 14 austritt, wieder in die ursprüngliche Austrittsrichtung mitgerissen. So entsteht gegenüber dem Ausführungsbeispiel gemäß Fig. 3 eine bauchigere Flamme.

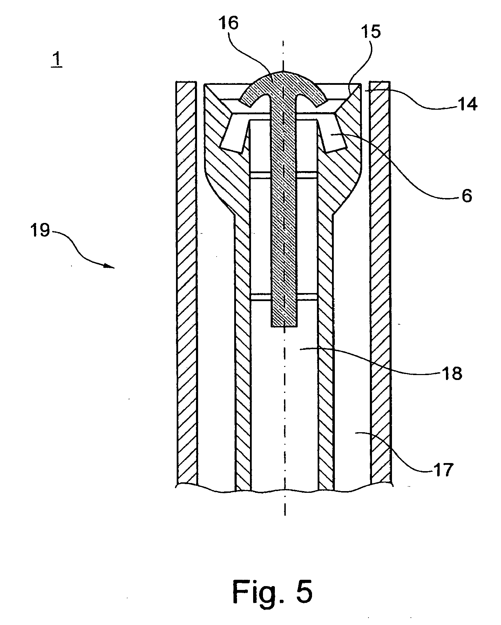

Bei dem Ausführungsbeispiel gemäß Fig. 5 wird das Betriebsmedium in einer innen angeordneten Betriebsmediumzuführung 18 geführt und der Reststoff in einer äußeren Flüssigkeitszuführung 17. Zudem wird in diesem Ausführungsbeispiel das Betriebsmedium nach Austritt aus der zentralen Betriebsmediumzuführung 18 durch die Umlenkvorrichtung 16 in die Resonanzkammer 6 umgelenkt, wo es Ultraschallwellen anregt, die aufgrund der konischen Aufweitung 15 in Richtung des Brennraums 8 gerichtet sind. Das Betriebsmedium tritt mit Geschwindigkeitskomponenten radial zu der Längsachse 10 des Ultraschallzerstäuber 1 aus. Der durch den Ringspalt 14 austretende Reststoff wird durch das austretende Betriebsmedium mitgerissen und grob zerstäubt. Im Ultraschallfeld des Ultraschallzerstäubers 1 wird der Reststoff dann feiner zerstäubt.

Anhand von zwei Vergleichsbeispielen sollen die Vorteile der Erfindung dargestellt werden.

Im Vergleichsbeispiel 1 werden in einer Abwasserverbrennungsanlage nach dem Stand der Technik mit Druckluft als Zerstäubermedium unterschiedliche Prozessabwässer und flüssige organische Rückstände mit hohem Heizwert aus der Acrylsäure- und Butylacrylatproduktion als Reststoff verbrannt. Die Abwassererbrennungsanlage umfasst eine dampfgekühlte vertikale Brennkammer mit einem quadratischen Querschnitt von ca. 4 m² und einer Höhe von 10 m. Der Hauptbrenner ist in der Ofendecke mittig angeordnet. Da die Verbrennung nicht autotherm verläuft, werden als Stützbrennstoff zur Verbrennung von zwei Abwassermengen, einer basischen und einer sauren, ca. 1200 kg/h organische Rückstände mit einem mittleren Heizwert von ca. 28100 kJ/kg, ca. 170 m³/h Erdgas und ca. 13300 m³/h Primär- und Sekundärluft durch den Hauptbrenner verbrannt. Die zu verbrennenden basischen und sauren Abwässer werden über jeweils zwei konventionelle Zerstäuberlanzen getrennt voneinander in die Brennkammer geführt. Die Zerstäuberlanzen sind unterhalb des Hauptbrenners in die Brennkammerwand symmetrisch zueinander mit einem Neigungswinkel von ca. 30° zur Brennerachse eingebaut.

Bei einer maximalen möglichen Abwassermenge von ca. 1203 kg/h ist die Rauchgasreinigung hydraulisch ausgelastet. Bei der Verbrennungsreaktion wurden so ca. 20100 kg/h Rauchgas mit einer Temperatur von 907 °C erzeugt. Das Rauchgas enthielt ca. 5,5 Vol.-% Sauerstoff, 65,6 Vol.-% Stickstoff, 9,7 Vol.-% Kohlendioxid, 19,0 Vol.-% Wasserdampf, 18 mg/m³ Kohlenmonoxid und ca. 108 mg/m³ Stickoxide. Nach einer Verweilzeit von ca. 2,7 Sekunden im Verbrennungskessel wurden die Verbrennungsgase durch eine Wassertauchung abgeschreckt und einer Rauchgasreinigungsanlage zugeführt. Die limitierende Größe dieser Verbrennungsanlage ist die Verweilzeit des Rauchgases mit einer Temperatur von 907 °C und damit der Rauchgasmassenstrom.

Um bei dieser Verbrennungsanlage den Durchsatz an saurem und basischem Abwasser zu erhöhen, wurden alle vier konventionellen Zerstäuberlanzen durch Ultraschallzerstäuber ersetzt, wobei als Betriebsmedium erfindungsgemäß reiner Sauerstoff, aber auch mit Sauerstoff angereicherte Druckluft oder reine Druckluft verwendet wurde.

Mit dieser Änderung der Verbrennungsanlage war es möglich, die Verbrennungsanlage kontinuierlich mit und ohne Leistungssteigerung zu betreiben. Als Ultraschallzerstäuber wurden Ultraschallzerstäuber gemäß Figur 4 eingesetzt und ein bauchig ausgebildeter Flüssigkeitsnebel erzeugt. Das Abwasser wurde zentrisch in den Ultraschallzerstäuber eingeleitet. Die Abwassermenge wurde auf insgesamt 2.280 kg/h basische und saure Abwässer erhöht. Zur Konstanthaltung der Reaktionsgasmenge wurde die Verbrennungsluftmenge auf 12200 m³/h reduziert und über die vier Ultraschallzerstäuber ca. 600 m³/h reiner Sauerstoff sowohl als Zerstäubermedium und als zusätzliches Oxidationsmittel zugegeben. Zur reinen Zerstäubung der Abwassermenge wären nur ca. 360 m³/h Sauerstoff ausreichend gewesen. Der überschüssige Sauerstoffanteil dient somit zusätzlich der Förderung der Verbrennungsleistung.

Durch Anpassung der Erdgasmenge auf ca. 85 m³/h und der organischen Rückstände auf ca. 1.730 kg/h wurde eine Verbrennungstemperatur im Kessel von 911 °C erzeugt. Das Rauchgas setzte sich aus ca. 5,4 Vol.-% Sauerstoff, 58,1 Vol.-% Stickstoff, 12,3 Vol.-% Kohlendioxid, 24,1 Vol.-% Wasserdampf, 5 mg/m³ Kohlenmonoxid und ca. 112 mg/m³ Stickoxide zusammen.

Bei gleicher Verweilzeit von ca. 2,7 Sek. und gleicher Reaktionsgasmenge wird damit die Verbrennungskapazität dieser Verbrennungsanlage um ca. 44 % gesteigert und die Feuerungswärmeleistung von 9,4 MW auf 11,3 MW erhöht.

Im Vergleichsbeispiel 2 werden in einer Abwasserverbrennungsanlage nach dem Stand der Technik zwei unterschiedliche Abwässer aus der pharmazeutischen und feinchemischen Vorproduktion thermisch entsorgt. Als Zusatzbrennstoff wurden Lösemittel mit einem mittleren Heizwert von ca. 21.700 kJ/kg, Heizöl - S und ca. 11.200 m³/h Primär- und Sekundärluft, durch einen Hauptbrenner der Brennkammer zugeführt. Die Brennkammer hat einen rechteckigen Querschnitt von ca. 6,7 m² und einer Höhe von ca. 7 m. Als Stützbrennstoff wurden ca. 400 kg/h Lösemittel und ca. 25 kg/h Heizöl-S zugegeben. Als Zerstäuberlanze war in der Mitte des Brenners eine konventionelle außen mischende Druckluftzerstäuberlanze installiert.

Das Lösemittel und das Heizöl-S wurden durch jeweils 5 Brennstoffdüsen, die konzentrisch um die Abwasserzerstäuberlanze angeordnet waren, in die Flamme eingespritzt. Falls notwendig wurden die Rauchgase durch einen Heizölbrenner auf eine Rauchgastemperatur von mindestens 850°C erhitzt. Am Boden der Brennkammer wurden durch eine Öffnung flüssige Salzschlacken entnommen. Mit der vorhandenen Verbrennungsanlage konnten maximal ca. 2.000 kg/h Abwasser mit einem mittleren Heizwert von ca. 2.830 kj/kg verbrannt werden, wobei ca. 17.500 kg/h Rauchgas mit einer Temperatur von ca. 920 °C erzeugt wurden. Das Rauchgas setzt sich aus ca. 4,9 Vol.-% Sauerstoff, 64,0 Vol.-% Stickstoff, 9,0 Vol.-% Kohlendioxid, 21,8 Vol.-% Wasserdampf, 12 mg/m³ Kohlenmonoxid und ca. 579 mg/m³ Stickoxid zusammen. Das Rauchgas wurde in einem Abhitzekessel abgekühlt und anschließend durch einen Venturi- und Radialwäscher, sowie Elektrofilter gereinigt.

Zur Erhöhung des Abwasserdurchsatzes bei konstantem Rauchgasvolumen und gleicher Rauchgastemperatur wurde der vorhandene Druckluftzerstäuber durch einen Ultraschallzerstäuber zur Zugabe des Abwassers als Reststoff mit Sauerstoff als Betriebsmedium ersetzt. Bei einem Durchsatz von ca. 760 m³/h Sauerstoff wurde über den Ultraschallzerstäuber gleichzeitig die für die Verbrennung notwendige Zusatzsauerstoffmenge in die Brennkammer eingeblasen, wobei die Primär- und Sekundärluftmenge auf ca. 9.400 m³/h reduziert wurden. Entsprechend der geforderten Rauchgastemperatur von ca. 920 °C wurde die Lösungsmittelmenge auf ca. 627 kg/h angepasst. Das Rauchgas setzte sich ca. 4,7 Vol% aus Sauerstoff, 51,6 Vol % Stickstoff, 11,0 Vol. % Kohlendioxid, 32, 4 Vol % Wasserdampf und 22 mg/m³ Kohlenmonoxid zusammen. Die Stickoxidkonzentration wurde auf ca. 184 mg/m³ reduziert.

Bei ansonsten gleicher Verweilzeit von ca. 2,0 Sekunden und gleicher Rauchgasmenge konnte die Abwasserverbrennungskapazität der Verbrennungsanlage um ca. 62 % gesteigert werden. Die Feuerungswärmeleistung erhöhte sich von 8,8 MW auf 10,7 MW.

Die erfindungsgemäße Verfahren erlaubt es, besonders effektiv einen flüssigen Reststoff (eine kontaminierte Flüssigkeit) zu verbrennen. Einem Verbrennungsprozess werden Tropfen der zu verbrennenden Flüssigkeit mit einem kleineren Durchmesser und gleichzeitig Sauerstoff als Oxidationsmedium zur Verfügung gestellt ohne die Temperatur des Verbrennungsprozesses, das Rauchgasvolumen und die Emission von Oxiden über die betriebsbedingten Grenzen zu erhöhen.

### Bezugszeichenliste

- 1: Ultraschallzerstäuber
- 2: Flüssigkeitsanschluss
- 3: Betriebsmediumanschluss
- 4: Hauptbrenner
- 5: Stützbrennstoffanschluss
- 6: Resonanzkammer
- 7: Ofen
- 8: Brennraum
- 9: Hauptbrennerachse
- 10: Längsachse
- 11: Oxidationsmittelanschluss
- 12: Rauchgasabzug
- 13: Schlackeabzug
- 14: Ringspalt
- 15: konische Aufweitung
- 16: Umlenkvorrichtung
- 17: Flüssigkeitszuführung
- 18: Betriebsmediumzuführung
- 19: Ultraschallzerstäuberkopf
- 20: vertikale Ebene

## Patentansprüche

1. Verfahren zur Verbrennung eines flüssigen Reststoffes, wobei ein Betriebsmedium mit einem Sauerstoffgehalt von mindestens 90 Vol.-% und der Reststoff der Verbrennung über mindestens einen Ultraschallzerstäuber (1) zugeführt werden, wobei durch das Betriebsmedium Ultraschallwellen erzeugt werden und der Reststoff fein zerstäubt wird, wobei die Verbrennung durch einen Hauptbrenner (4) befördert wird, dem zumindest ein Stützbrennstoff zugeführt wird, wobei der Stützbrennstoff zumindest einem der folgenden Elemente:
a) dem Hauptbrenner (4) und
b) dem Reststoff
zugegeben wird und die Zugabe des Stützbrennstoffs in Abhängigkeit vom Wassergehalt des flüssigen Reststoffs gesteuert wird.

2. Verfahren nach Anspruch 1, bei dem der Stützbrennstoff zumindest einem der folgenden Elemente:
a) dem Hauptbrenner und
b) dem Reststoff
zugegeben wird, wenn bei der Verbrennung eine vorgebbare Grenztemperatur unterschritten wird.

3. Verfahren nach einem der vorhergehenden Ansprüche, bei dem dem Stützbrennstoff zumindest einem der folgenden Elemente:
a) dem Hauptbrenner und
b) dem Reststoff
zugegeben wird und die Zugabe des Stützbrennstoffs so geregelt wird, dass bei der Verbrennung die Temperatur in einem vorgebbaren Temperaturbereich liegt.

4. Verfahren nach einem der vorhergehenden Ansprüche, wobei der Stützbrennstoff einen konventionellen Brennstoff umfasst.

5. Verfahren nach einem der vorhergehenden Ansprüche, wobei dem Ultraschallzerstäuber (1) eine Menge an Betriebsmedium zugeführt wird, die größer ist als die für die Zerstäubung notwendige Menge.

6. Verfahren nach einem der vorhergehenden Ansprüche, wobei die Verbrennungstemperatur zwischen 800°C und 1400 °C liegt.

7. Verfahren nach einem der vorhergehenden Ansprüche, wobei eine Mischung von Reststoff und Betriebsmedium außerhalb des Ultraschallzerstäubers (1) erfolgt.

8. Verfahren nach einem der vorhergehenden Ansprüche, wobei das Betriebsmedium mit einer Geschwindigkeit v_{z} einer Resonanzkammer (6) des Ultraschallzerstäubers (1) zugeführt wird, wobei die Geschwindigkeit v_{z} mit der Schallgeschwindigkeiten des Betriebsmediums v_{c} einen Quotienten v_{z}/v_{c} bildet, der zwischen 0,9 und 1,1 liegt.

## Claims

1. Method for the combustion of a liquid waste material, wherein a working medium having an oxygen content of at least 90 vol% and the waste material are delivered to the combustion through at least one ultrasonic atomizer (1), wherein ultrasound waves are generated by the working medium and the waste material is finely atomized, wherein the combustion is promoted by a main burner (4) to which at least one supporting fuel is delivered
wherein the supporting fuel is supplied to at least one of the following elements:
a) the main burner (4) and
b) the waste material,
and the supporting fuel supply is controlled as a function of the water content of the liquid waste material.

2. Method according to Claim 1, wherein the supporting fuel is supplied to at least one of the following elements:
a) the main burner and
b) the waste material,
when a predeterminable limit temperature is fallen below during the combustion.

3. Method according to one of the preceding claims, wherein the supporting fuel is supplied to at least one of the following elements:
a) the main burner and
b) the waste material,
and the supporting fuel supply is regulated so that the temperature lies in a predeterminable temperature range during the combustion.

4. Method according to one of the preceding claims, wherein the supporting fuel comprises a conventional fuel.

5. Method according to one of the preceding claims, wherein a quantity of working medium which is greater than the quantity necessary for the atomization is supplied to the ultrasonic atomizer (1).

6. Method according to one of the preceding claims, wherein the combustion temperature lies between 800°C and 1400°C.

7. Method according to one of the preceding claims, wherein mixing of waste material and working medium is carried out outside the ultrasonic atomizer (1).

8. Method according to one of the preceding claims, wherein the working medium is delivered with a velocity v_{z} to a resonant chamber (6) of the ultrasonic atomizer (1), wherein the velocity v_{z} forms a ratio v_{z/}v_{c}, which lies between 0.9 and 1.1, with the velocity of sound v_{c} of the working medium.

## Revendications

1. Procédé pour la combustion d'un résidu liquide, dans lequel on envoie à la combustion un carburant ayant une teneur en oxygène d'au moins 90 % en volume et le résidu au moyen d'au moins un pulvérisateur à ultrasons (1), dans lequel on produit des ondes ultrasonores au moyen du carburant et on pulvérise finement le résidu, dans lequel on favorise la combustion par un brûleur principal (4), auquel on ajoute au moins un combustible d'appoint, dans lequel on ajoute le combustible d'appoint à au moins un des éléments suivants:
a) le brûleur principal (4) et
b) le résidu
et on commande l'addition du combustible d'appoint en fonction de la teneur en eau du résidu liquide.

2. Procédé selon la revendication 1, dans lequel on ajoute le combustible d'appoint à au moins un des éléments suivants:
a) le brûleur principal et
b) le résidu,
lorsque la température descend en dessous d'une limite prédéterminable lors de la combustion.

3. Procédé selon l'une quelconque des revendications précédentes, dans lequel on ajoute un combustible d'appoint à au moins un des éléments suivants:
a) le brûleur principal et
b) le résidu
et on régule l'addition du combustible d'appoint de telle manière que la température se situe dans une plage de température prédéterminable lors de la combustion.

4. Procédé selon l'une quelconque des revendications précédentes, dans lequel le combustible d'appoint comprend un combustible conventionnel.

5. Procédé selon l'une quelconque des revendications précédentes, dans lequel on ajoute au pulvérisateur à ultrasons (1) une quantité de carburant qui est plus grande que la quantité nécessaire pour la pulvérisation.

6. Procédé selon l'une quelconque des revendications précédentes, dans lequel la température de combustion se situe entre 800°C et 1400°C.

7. Procédé selon l'une quelconque des revendications précédentes, dans lequel il se produit un mélange de résidu et de carburant à l'extérieur du pulvérisateur à ultrasons (1).

8. Procédé selon l'une quelconque des revendications précédentes, dans lequel on ajoute le carburant avec une vitesse v_{z} à une chambre de résonance (6) du pulvérisateur à ultrasons (1), dans lequel la vitesse v_{z} forme avec la vitesse du son du carburant v_{c} un quotient v_{z}/v_{c}, qui se situe entre 0,9 et 1,1.
